# EUROPÄISCHE PATENTSCHRIFT

(11) **EP 1 273 429 B1**
(45) Veröffentlichungstag und Bekanntmachung des Hinweises auf die Patenterteilung: **10.11.2004**
(21) Anmeldenummer: 01116426.6
(22) Anmeldetag: 06.07.2001
(51) Int. Cl.: B29C 69/00, F24D 3/14, B29C 44/56

(54) **Verfahren zum Herstellen einer Dämmplatte**
Method for manufacturing an insulating board
Procédé de fabrication d'un panneau isolant

(43) Veröffentlichungstag der Anmeldung: 08.01.2003
(73) Patentinhaber: Uponor Innovation AB, 513 81 Fristad (SE)
(72) Erfinder: Höffker, Bruno, 48432 Rheine (DE); Claussen, Jörg, 48329 Havixbeck (DE)
(74) Vertreter: Hilleringmann, Jochen, Dipl.-Ing.

(56) Entgegenhaltungen:
- DE-U- 29 820 382
- FR-A- 2 693 402

## Beschreibung

Die Erfindung betrifft ein Verfahren zum Herstellen einer Dämmplatte aus Dämmmaterial mit Haltevorsprüngen zum Halten von Flächenheizungs- bzw. Flächenkühlungsrohren, insbesondere zum Halten von Fußbodenheizungsrohren.

Derartige Dämmplatten bestehen zumeist aus expandiertem Polystyrol (EPS). Die bekannten Dämmplatten weisen an ihren Oberseiten Haltevorsprünge in Form von Noppen oder dergleichen auf, zwischen denen das zu verlegende Rohr klemmend gehalten wird. Zur Herstellung derartiger EPS-Dämmplatten wird Polystyrol in eine aus einer Ober- und einer Unterform bestehenden Form eingebracht, in der das Polystyrol unter Einwirkung von Temperatur bzw. Zugabe von heißem Wasserdampf aufschäumt und expandiert. Eine der beiden Formteile der Form, d.h. entweder die Ober- oder die Unterform ist mit zu den Haltevorsprüngen komplementären Vertiefungen versehen.

Im Stand der Technik wird pro Form jeweils eine Dämmplatte hergestellt. Der Prozess des Öffnens und Schließens der Form sowie des Herausnehmens des Formlings aus der Form wird also jeweils für eine einzige Dämmplatte durchgeführt. Dies ist recht zeitintensiv.

Der Erfindung liegt die Aufgabe zu Grunde, ein Verfahren zum Herstellen einer Dämmplatte aus Dämmmaterial im Hinblick auf die Effektivität und Effizienz zu verbessern.

Zur Lösung dieser Aufgabe wird mit der Erfindung ein Verfahren zum Herstellen einer Dämmplatte aus Dämmmaterial mit Haltevorsprüngen zum Halten von Flächenheizungs- bzw. Flächenkühlungsrohren, insbesondere zum Halten von Fußbodenheizungsrohren, bei dem DE-A-298 20 382 U1 beschreibt ein Verfahren zum Herstellen einer Dämmplatte aus Dämmmaterial mit Haltevorsprüngen zum Halten von Flächenheizungsrohren, bei dem das Dämmmaterial zur Bildung eines Formlings in eine Form eingebracht wird, die eine Ober- und eine Unterform aufweist. Zur Herstellung einer Verbunddämmplatte aus mehreren Lagen wird ein in einer ersten Form hergestellter erster Formling in eine zweite Form eingelegt, in der auf dem ersten Formling ein zweiter Formling erzeugt und mit dem ersten Formling verbunden wird, wodurch ein zweilagiger Aufbau entsteht.

FR-A-269 34 02 beschreibt ein Verfahren zum Herstellen einer einlagigen Dämmplatte aus Dämmmaterial mit Haltevorsprüngen, bei dem zuerst ein Doppel der zu erzeugenden Dämmplatte ausgebildet wird und dieses Doppel anschließend mittig zerteilt wird, um zwei der zu erzeugenden Dämmplatten zu erhalten.

Der Erfindung liegt die Aufgabe zu Grunde, ein Verfahren zum Herstellen einer Dämmplatte aus Dämmmaterial im Hinblick auf die Effektivität und Effizienz zu verbessern.

Zur Lösung dieser Aufgabe wird mit der Erfindung ein Verfahren zum Herstellen einer Dämmplatte aus Dämmmaterial mit Haltevorsprüngen zum Halten von Flächenheizungs- bzw. Flächenkühlungsrohren, insbesondere zum Halten von Fußbodenheizungsrohren vorgeschlagen, bei dem
- in eine Form, die eine Ober- und eine Unterform aufweist, welche an ihren einander gegenüberliegenden, die Ober- und Seite des Formlings bildenden Innenseiten Vertiefungen zur Ausbildung der Haltervorsprünge aufweist, eine zuvor hergestellte Platte aus Dämmmaterial mit vorsprungslosen Ober- und Unterseiten eingelegt wird, und
- zur Bildung eines Formlings in die Zwischenräume zwischen den Ober- und Unterseiten der Platte und den diesen jeweils gegenüberliegenden Innenseiten der Form zum Anformen an die Platte Dämmmaterial eingebracht wird und
- der Formling zur Bildung zweier Dämmplatten entlang einer zwischen Ober- und Unterseite des Formlings angeordneten Trennungsebene durchtrennt wird.

Bevorzugte Merkmale der Erfindung sind in den Unteransprüchen 2 bis 7 definiert.

Bei dem erfindungsgemäßem Verfahren wird eine Form zum Bilden eines Formlings aus dem Dämmmaterial verwendet, deren Ober- und Unterform jeweils Vertiefungen zur Ausbildung der Haltevorsprünge der späteren Dämmplatten aufweisen. Bei dem Formling handelt es sich also um eine Dämmplatte, die an ihrer Ober- und an ihrer Unterseite jeweils Haltevorsprünge aufweist. Durch Trennen des Formlings in zwei Teile entstehen dann zwei Dämmplatten. Die Trennung des Formlings erfolgt entlang einer zwischen Ober- und zur Unterseite des Formlings angeordneten Trennungsebene, die z.B. parallel zur Ober- und Unterseite des Formlings oder wellenlinienförmig verläuft.

Pro Zyklus (Schließen der Form, Einbringen von Dämmmaterial in die Form, Formen des Formlings in der Form, Öffnen der Form und Entnehmen des Formlings) entstehen also zwei Dämmplatten, was die Wirtschaftlichkeit des Verfahrens steigert.

Um einer Dämmplatte neben guten Wärmedämmungseigenschaften auch gute Trittschalldämmungseigenschaften zu verleihen, ist es grundsätzlich bekannt, für die Haltevorsprünge und die obere Lage der Dämmplatte ein Dämmmaterial mit einer höheren Dichte zu verwenden als für den übrigen Teil der Dämmplatte. Dies wird im Falle von expandiertem Polystyrol dadurch realisiert, dass für die Herstellung des unteren Teils der Dämmplatte eine geringere Menge an Dämmmaterial pro Volumeneinheit des Formraums der Form eingebracht wird als für den oberen Teil der Dämmplatte. Bei dem erfindungsgemäßem Verfahren wird nun in die Form eine Dämmmaterialplatte mit vorsprungslosen Ober- und Unterseiten eingelegt und in die sich zwischen diesen Seiten der Dämmmaterialplatte und der Ober- und Unterform befindenden Zwischenräume Dämmmaterial in einer höheren Dichte eingebracht, das dann beim Formungsprozess an die vorsprungslose Dämmmaterialplatte angeformt wird. Die Dämmmaterialplatte wird kostengünstig als Block (beispielsweise als Blockschaum oder EPS-Block) hergestellt und anschließend zu sogenanntem Tafelmaterial (Platten) verarbeitet. Diese Platten werden dann in die Form eingelegt. Das in die Zwischenräume unter- und oberhalb der Dämmmaterialplatte in die Form eingebrachte Dämmmaterial kann unterschiedliche Dichten aufweisen; ebenso können die sich zwischen der Unter- und der Oberseite und der Unter- und der Oberform bildenden Zwischenräume unterschiedlich groß sein.

Die Ausgestaltungen der Vertiefungen der Oberform und der Unterform können bezogen auf jedes Formteil aber auch bezogen auf die Oberform gegenüber der Unterform verschieden sein. Ebenso muss die Trennungsebene nicht notwendigerweise mit der Mittelebene zwischen der Ober- und der Unterseite des Formlings zusammen fallen. Somit ist es möglich, mit einer Form zwei unterschiedlich ausgestaltete Dämmplatten herzustellen, wobei sich die unterschiedliche Ausgestaltung auf die Anzahl und/oder Ausbildung der Haltevorsprünge und/oder die Dicke der Dämmplatte bezieht.

Es ist ferner möglich, den Formling vor seiner Durchtrennung ggf. in einer weiteren Form oder in derselben Form nachzuverdichten.

Zum Durchtrennen des Formlings werden entweder Schneidwerkzeuge, beispielsweise in Form von sich bewegenden, insbesondere auch rotierenden Messern oder aber Schneidwerkzeuge in Form von Heizdrähten eingesetzt.

Nachfolgend wird an Hand der Zeichnung ein Ausführungsbeispiel der Erfindung erläutert. Im einzelnen zeigen:
- Fig. 1: schematisch die Erzeugung von Blockschaum bzw. Tafelmaterial als Ausgang für die erfindungsgemäß hergestellten Dämmplatten,
- Fig. 2: schematisch den Vorgang des Anschäumens von Noppenoberflächen,
- Fig. 3: den Vorgang des Pressens des angeschäumten Tafelmaterials,
- Fig. 4: schematisch den Vorgangs des Trennens sowie die beiden sich daraus ergebenden Wärmedämmplatten und
- Fig. 5: eine alternative Ausgestaltung der beiden längs einer wellenförmigen Ebene getrennten Wärmedämmplatten.

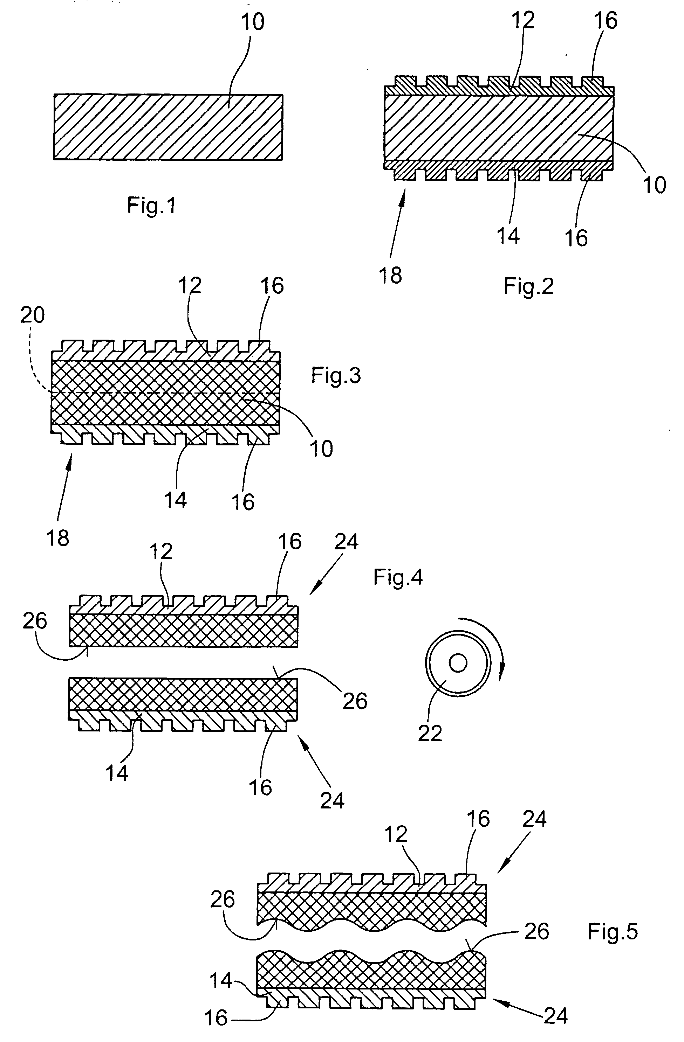

In den Fign. 1 bis 4 sind schematisch die einzelnen Verfahrensschritte zum erfindungsgemäßem Herstellen von Dämmmaterial-Dämmplatten dargestellt. Das erfindungsgemäße Verfahren wird hier anhand des Beispiels eines Transferschäumungsprozesses beschrieben. Es ist aber auch möglich, dass sämtliche der Formung der Doppel-Dämmplatte dienenden Prozessschritte in einer einzigen Form ausgeführt werden, die dann über verfahrbare die Innenseiten der Form bildenden Wände verfügen muss.

Gemäß Fig. 1 wird zunächst eine Dämmplatte 10 aus EPS hergestellt, und zwar am zweckmäßigsten in Form eines EPS-Blocks, der in einzelne Platten 10 zerteilt wird. Die Herstellung einer einzelnen Platte 10 bzw. eines EPS-Blockes erfolgt in einer (nicht dargestellten) Form A.

Anschließend (siehe Fig. 2) wird die Platte 10 in eine (ebenfalls nicht dargestellte) Form B eingebracht, deren Ober- und Unterform an ihren der Ober- und Unterseite der Platte 10 gegenüberliegenden Innenseiten Vertiefungen aufweisen. Zwischen diesen Innenseiten und der Ober- und der Unterseite der Platte 10 bilden sich in der Form B Zwischenräume, in die Polystyrol-Material eingebracht wird, das in der Form B aufschäumt und eine obere Schicht 12 sowie eine untere Schicht 14 an der Ober- bzw. der Unterseite der Platte 10 bildet, wobei diese Schichten an die Platte 10 angeschäumt sind. Diese Schichten weisen die Haltevorsprünge 16 auf, zwischen denen die späteren Rohre klemmend verlegt werden. Die Dichte des EPS-Materials der oberen und der unteren Schicht 12,14 ist unterschiedlich und insbesondere größer als die Dichte des EPS-Materials der Platte 10.

Nach der Herstellung des Formlings 18 in der Form B wird dieser Formling 18 einer (ebenfalls nicht dargestellten) Form C zugeführt, in der es zu einer Nachverdichtung des Formlings 18 kommt (siehe Fig. 3).

Anschließend (siehe Fig. 4) erfolgt die Trennung des Formlings 18 entlang der durch die Linie 20 dargestellten Trennungsebene, die in diesem Ausführungsbeispiel mit der Mittelebene des Formlings 18 zusammen fällt. Der Prozessschritt des Trennens ist in Fig. 4 bei 22 angedeutet. Als Ergebnis dieses Trennvorgangs entstehen zwei EPS-Dämmplatten 24 mit den Noppen 16 an ihren einen Seiten, während die anderen Seiten 26 vorsprungslos und eben ausgebildet sind.

Diese Trennungsebene 20 kann insbesondere und bevorzugt auch wellenförmig verlaufen, was zu einer alternativen Ausgestaltung der beiden EPS-Dämmplatten 24 gemäß Fig. 5 führt, die gewellte untere Seiten 26 aufweisen. Dies resultiert in verbesserten Dämmeigenschaften, wenn die Dämmplatten 24 mit den gewellten Unterseiten 26 auf einem Untergrund (z.B. Rohbeton) aufliegen.

## Patentansprüche

1. Verfahren zum Herstellen einer Dämmplatte aus Dämmmaterial mit Haltevorsprüngen zum Halten von Flächenheizungs- bzw. Flächenkühlungsrohren, insbesondere zum Halten von Fußbodenheizungsrohren, bei dem
- in eine Form, die eine Ober- und eine Unterform aufweist, welche an ihren einander gegenüberliegenden, die Ober- und Unterseite des Formlings (10) bildenden Innenseiten Vertiefungen zur Ausbildung der Haltevorsprünge (16) aufweist, eine zuvor hergestellte Platte aus Dämmmaterial mit vorsprungslosen Ober- und Unterseiten eingelegt wird,
- zur Bildung eines Formlings (10) in die Zwischenräume zwischen den Ober- und Unterseiten der Platte und den diesen jeweils gegenüberliegenden Innenseiten der Form zum Anformen an die Platte Dämmmaterial eingebracht wird und
- der Formling (10) zur Bildung zweier Dämmplatten (24) entlang einer zwischen Ober- und Unterseite des Formlings (10) angeordneten Trennungsebene (20) durchtrennt wird.

2. Verfahren nach Anspruch 1, **dadurch gekennzeichnet, dass** die Anzahl und/oder Ausgestaltung der Vertiefungen der Innenseite der Oberform von der Ausgestaltung der Vertiefungen der Innenseite der Unterform zur Bildung bezüglich Anzahl und/oder Ausgestaltung unterschiedlicher Haltevorsprünge (16) an der Ober- und der Unterseite des Formlings (10) verschieden ist.

3. Verfahren nach Anspruch 1 oder 2, **dadurch gekennzeichnet, dass** die Trennungsebene (20) außerhalb der Mittelebene zwischen der Ober- und der Unterseite des Formlings (10) liegt.

4. Verfahren nach Anspruch 3, **dadurch gekennzeichnet, dass** das an die Ober- und Unterseiten der Platte angeformte Dämmmaterial eine höhere Dichte aufweist als das Dämmmaterial der Platte.

5. Verfahren nach Anspruch 3 oder 4, **dadurch gekennzeichnet, dass** in die beiden Zwischenräume unterschiedliche bzw. unterschiedliche Dichten aufweisende an die Platte anzuformende Dämmmaterialien eingebracht werden.

6. Verfahren nach einem der Ansprüche 1 bis 5, **dadurch gekennzeichnet, dass** der Formling (10) nach seiner Herstellung vor dem Durchtrennen in der Form oder in einer weiteren Form nachverdichtet wird.

7. Verfahren nach einem der Ansprüche 1 bis 6, **dadurch gekennzeichnet, dass** als Dämmmaterial aufschäumbares Material und insbesondere Polystyrol verwendet wird, das unter Einwirkung von Wärme und/oder unter Zufuhr eines Gases, insbesondere heißen Wasserdampfes in der Form aufschäumt.

## Claims

1. Method for manufacturing an insulating board of insulating material, said insulating board comprising holding projections for holding surface heating tubes and/or surface cooling tubes, in particular for holding underfloor heating tubes, wherein
- into a mold, having an upper mold portion and a lower mold portion which are provided, at their mutually opposite inner sides defining the upper side and the lower side of the molded part (10), with recesses defining the holding projections (16), a previously manufactured board of insulating material with projection-free upper and lower sides is placed,
- for forming a molded part (10), insulating material is inserted into the spaces between the upper and lower sides of the board and the inner sides of the mold opposite said upper and lower sides for molding said insulating material to the board, and
- the molded part (10), for forming two insulating boards (24), is cut through along a separation plane (20) between the upper side and the lower side of the molded part (10).

2. Method according to claim 1, **characterized in that** the number and/or configuration of the recesses of the inner side of the upper mold portion differs from the configuration of the recesses of the inner side of the lower mold portion for defining holding recesses (16) at the upper side and the lower side of the molded part (10) differing from each other in terms of number and/or configuration.

3. Method according to claim 1 or 2, **characterized in that** the separation plane (20) lies outside the center plane between the upper side and the lower side of the molded part (10).

4. Method according to claim 3, **characterized in that** the insulation material molded to the upper and lower sides of the board has a higher density than the insulation material of the board.

5. Method according to claim 3 or 4, **characterized in that** into the two spaces different insulation materials and/or insulation materials with different density, which insulation materials are to be molded to the board, are inserted.

6. Method according to one of claims 1 to 5, **characterized in that** the molded part (10), after having been manufactured and prior to being cut through, is subjected to further compression in the mold or in a different mold.

7. Method according to one of claims 1 to 6, **characterized in that** expandable material and in particular polystyrene is used as insulation material, said material expanding in the mold when exposed to heat and/or when a gas, in particular hot water vapour, is supplied.

## Revendications

1. Procédé pour fabriquer une plaque isolante en matériau isolant présentant des saillies de maintien pour maintenir des tubes de chauffage ou de refroidissement en surface, en particulier pour maintenir des tubes de chauffage de plancher, dans lequel :
-- on met en place une plaque préalablement fabriquée en matériau isolant présentant une face supérieure et une face inférieure dépourvues de saillies, dans un moule qui comprend un moule supérieur et un moule inférieur qui présentent sur leurs faces intérieures mutuellement opposées formant la face supérieure et la face inférieure de l'ébauche (10) des renfoncements, pour réaliser les saillies de maintien (16),
-- pour former une ébauche (10), on introduit un matériau isolant dans les intervalles entre la face supérieure et la face inférieure de la plaque et les faces intérieures du moule respectivement opposées à ces faces de la plaque pour surmouler ce matériau sur la plaque, et
-- pour réaliser de plaque isolante (24), l'ébauche (10) est refendue le long d'un plan de séparation agencé entre la face supérieure et la face intérieure inférieure de l'ébauche (10).

2. Procédé selon la revendication 1, **caractérisé en ce que** le nombre et/ou la conformation des renfoncements de la face intérieure du moule supérieur différent de la conformation des renfoncements de la face intérieure du moule inférieur afin de former des saillies de maintien (16) qui différent quant à leur nombre et/ou quant à leur conformation sur la face supérieure et sur la face inférieure de l'ébauche (10).

3. Procédé selon l'une ou l'autre des revendications 1 et 2, **caractérisé en ce que** le plan de séparation (20) est situé à l'extérieur du plan médian entre la face supérieure et la face inférieure de l'ébauche (10).

4. Procédé selon la revendication 3, **caractérisé en ce que** le matériau isolant surmoulé sur la face supérieure et sur la face inférieure de la plaque présente une densité supérieure au matériau isolant de la plaque.

5. Procédé selon l'une ou l'autre des revendications 3 et 4, **caractérisé en ce que** l'on injecte dans les deux intervalles des matériaux isolants différents ou un matériau isolant à densité différente pour le surmoulage sur la plaque.

6. Procédé selon l'une des revendications 1 à 5, **caractérisé en ce que** l'ébauche (10) subit un compactage supplémentaire dans le moule ou dans un autre moule après sa fabrication et avant sa refente.

7. Procédé selon l'une des revendications 1 à 6, **caractérisé en ce que** l'on utilise à titre de matériau isolant un matériau moussant et en particulier du polystyrène qui mousse dans le moule sous l'action de chaleur et/ou sous l'admission d'un gaz, en particulier de vapeur d'eau chaude.
